(19)

Europäisches
Patentamt
European
Patent Office
Office européen
des brevets

(11) **EP 4 692 758 A1**

(12) **EUROPEAN PATENT APPLICATION**
published in accordance with Art. 153(4) EPC

(43) Date of publication:
**11.02.2026 Bulletin 2026/07**

(21) Application number: **23930864.6**

(22) Date of filing: **28.11.2023**

(51) International Patent Classification (IPC):
*G01N 15/10* (2024.01)     *G01N 27/622* (2021.01)
*H01J 49/42* (2006.01)

(52) Cooperative Patent Classification (CPC):
**G01N 15/10; G01N 27/622; H01J 49/42**

(86) International application number:
**PCT/JP2023/042563**

(87) International publication number:
**WO 2024/202239 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2023  JP 2023048023**

(71) Applicants:
• **SHIMADZU CORPORATION
Kyoto-shi, Kyoto 604-8511 (JP)**
• **National University Corporation Kobe University
Kobe-shi, Hyogo 657-8501 (JP)**

(72) Inventors:
• **FURUHASHI, Osamu
Kyoto-shi, Kyoto 604-8511 (JP)**
• **KINUGAWA, Tohru
Kobe-shi, Hyogo 657-8501 (JP)**

(74) Representative: **Mewburn Ellis LLP
Aurora Building
Counterslip
Bristol BS1 6BX (GB)**

(54) **ION ANALYSIS METHOD AND ION ANALYSIS DEVICE**

(57)     An ion analysis method according to one embodiment of the present invention comprises: an ionization step for ionizing an object to be measured; an ion input step for inputting ions obtained in the ionization step or objective ions that are ions derived from said ions to a moving space (30) having a predetermined gas pressure adjusted within a range that allows particles to perform Brownian motion, and allowing the gravity and an electric field to act; a measurement step for acquiring first information on the motion by the action of the gravity and the electric field with respect to the objective ions inputted to the moving space, and acquiring second information on the Brownian motion; and a computation step for determining the mass or electric charge of the objective ions on the basis of the first and second information acquired in the measurement step. As a result, it is possible to accurately and efficiently measure the mass and electric charge of ions such as macromolecules and viruses.

Fig. 1

**Description**

TECHNICAL FIELD

The present invention relates to a method and an apparatus for analyzing ions derived from various components in a sample.

BACKGROUND ART

As a method for measuring the charge amount of particles, the Millikan's oil droplet experiment disclosed in Non Patent Literature 1 is known. In the Millikan's oil droplet experiment, a motion determined by the gravity and Coulomb force acting on a charged fine particle such as a charged oil droplet in a DC electric field is measured, and the mass or charge of the charged fine particle is obtained by calculation from the measurement result.

CITATION LIST

NON PATENT LITERATURE

Non Patent Literature 1: "9 Measurement of Elementary Charge -Description of Millikan's Measurement Principle of Elementary Charge-", [Online], [Searched on November 28, 2023], Shiga Prefectural Education Center, Internet <URL: https://www.shiga-ec.ed.jp/www/contents/1440578636412/files/kiki_phys_09.pdf>
Non Patent Literature 2: N.C. Contino and 1 other person, "Charge detection mass spectrometry for single ions with a limit of detection", International Journal of Mass Spectrometry, Vol. 345-347, 2013, pp. 153-159
Non Patent Literature 3: "Charge Detection", [Online], [Searched on November 28, 2023], Megadalton Solutions, Inc., Internet <URL: https://megadaltonsolutions.com/charge-detection/>
Non Patent Literature 4: Kenichiro AOKI, "To Those Who Want to Learn Modern Physics -From Atoms to Cosmology", Keio University Press, May 20, 2011, pp. 30-32
Non Patent Literature 5: Osamu FURUHASHI and 5 others, "Research and Development of Digital Ion Trap Mass Spectrometer", Shimadzu Review, Vol. 62, Nos. 3, 4, 2005
Non Patent Literature 6: "Dynamic Light Scattering DLS Measurement Principle", [Online], [Searched on November 28, 2023], Consortium for Measurement Solution (COMS), Internet <https://unit.aist.go.jp/mcml/coms/nano-dls.html>

SUMMARY OF INVENTION

TECHNICAL PROBLEM

In the Millikan's oil droplet experiment, a fine particle made of a material whose density is known is measured, and the mass or charge of the charged fine particle is calculated using the known density. Therefore, in the case of fine particles made of a material whose density is unknown, the masses or charges of the charged fine particles cannot be obtained.
On the other hand, as a method for measuring the masses of ions of molecules/particles, there is a spectrometry method called charge detection mass spectrometry (CDMS) (Non Patent Literatures 2 and 3). In CDMS, molecular ions to be observed are introduced into a reciprocating reflective ion trap and repeatedly reciprocated inside the ion trap. The ion trap is provided with a detection unit which detects ions in motion using an electrostatic induction action, and a data processing unit performs Fourier transform processing on induced charge signals obtained by the detection unit. By this Fourier transform processing, the mass-to-charge ratios (m/z: strictly, it is *"m/z"* in italics, but non-italic "m/z" is used as a substitute) of molecular ions can be obtained from the frequency of the induced charge signal. At the same time, the values of the valence of the ions can be obtained from the amplitude of the signals, and the masses of the ions can be calculated from m/z and the valence.
As described above, in CDMS, the masses or charges of ions of molecules/particles whose density is unknown can be obtained, but if the ion concentration is not at a single particle level, an erroneous result may be given. For example, when two ions having the same m/z pass through the vicinity of the detection unit at the same time or in close temporal proximity to each other, an induced charge larger than that of a single particle, that is, a large amplitude is generated, and when the two ions are interpreted as a single particle, an incorrect valence z is given, and as a result, an incorrect mass m is given. In order to avoid erroneous interpretation, it is necessary to reduce the ion concentration to reach a single particle level, and in particular, in a case where it is desired to measure ions derived from various components contained in a sample, the throughput of measurement is reduced.
The present invention has been made to solve such problems, and an object of the present invention is to provide a novel ion analysis method and ion analyzer capable of measuring the masses and charges of ions of molecules by a technique completely different from CDMS.

SOLUTION TO PROBLEM

A first mode of an ion analysis method according to the present invention includes:

an ionization step of ionizing a measurement target;
an ion input step of inputting a target ion, which is an ion obtained in the ionization step or an ion derived from the ion obtained in the ionization step, into a moving space which is adjusted to a predetermined gas pressure of a range allowing particles to perform Brownian motion and in which gravity and an electric field are allowed to act;
a measurement step of acquiring, for the target ion input to the moving space, first information relating to a motion by an action of gravity or actions of gravity and the electric field and second information relating to Brownian motion; and
an arithmetic step of obtaining a mass or a charge of the target ion on the basis of the first information and the second information obtained in the measurement step.

A first mode of an ion analyzer according to the present invention is an apparatus for performing the ion analysis method of the first mode, the apparatus including:

an ionization unit configured to ionize a measurement target;
an analysis chamber having an internal moving space which is adjusted to a predetermined gas pressure of a range allowing particles to perform Brownian motion and in which gravity acts;
an electric field forming unit configured to selectively form an electric field in the moving space;
an ion input unit configured to input a target ion, which is an ion generated by the ionization unit or an ion derived from the ion generated by the ionization unit, into the moving space;
a measurement execution unit configured to acquire, for the target ion input to the moving space, first information relating to a motion by actions of gravity and the electric field and second information relating to Brownian motion; and
an arithmetic processing unit configured to obtain a mass or a charge of the target ion on the basis of the first information and the second information.

A second mode of an ion analysis method according to the present invention includes:

an ionization step of ionizing a measurement target;
an ion input step of inputting target ions, which are ions obtained in the ionization step or ions derived from the ions obtained in the ionization step, into a moving space which is adjusted to a predetermined gas pressure and in which gravity acts and an electric field acting on the ions in a direction orthogonal to or oblique to a direction of an action of the gravity is formed;
a separation step of spatially separating the target ions input to the moving space from other ions using motions of ions reflecting a difference in size and mass of ions due to the action of gravity and motions reflecting a difference in charge of the ions due to an action of the electric field in the moving space; and
a detection step of detecting at least a part of the target ions separated in the separation step.

A second mode of the ion analyzer according to the present invention is an apparatus for performing the ion analysis method of the second mode, the apparatus including:

an ionization unit configured to ionize a measurement target;
an analysis chamber having an internal moving space which is adjusted to a predetermined gas pressure and in which gravity acts;
an electric field forming unit configured to selectively form, inside the moving space, an electric field acting on ions in a direction orthogonal to or oblique to a direction of an action of gravity;
an ion input unit configured to input target ions, which are ions generated by the ionization unit or ions derived from the ions generated by the ionization unit, into the moving space; and
a detection unit configured to detect at least a part of the target ions spatially separated from other ions by motions of the ions reflecting a difference in size and mass of ions due to the action of gravity and motions reflecting a difference in charge of the ions due to an action of the electric field in the moving space.

ADVANTAGEOUS EFFECTS OF INVENTION

In the ion analysis method and apparatus of the first mode, Brownian motion of the ion, and the motion of the ion due to the action of gravity or both the actions of gravity and the electric field are observed, and the mass or the charge of the ion is calculated on the basis of information relating to such motions. As a result, by the ion analysis method and apparatus of the first mode, it is possible to know any one or both of the masses and the charges of the ions of macromolecules without performing an operation to substantially isolate the ions in advance.

On the other hand, in the ion analysis method and apparatus of the second mode, even ions of macromolecules can be separated and detected according to the masses and the charges by both the action of gravity and the action of the electric field acting in a direction different from the direction of the action of gravity. As a result, similarly to the ion analysis method and apparatus of the first mode, also by the ion analysis method and apparatus of the second mode, it is possible to know any one or both of the masses and the charges of the ions of macromolecules without performing an operation to substantially isolate the ions in advance.

BRIEF DESCRIPTION OF DRAWINGS

[Fig. 1] A schematic configuration diagram of an ion analyzer according to an embodiment of the present invention.
[Fig. 2] A schematic configuration diagram of an ion analyzer according to another embodiment of the present invention.
[Fig. 3] A schematic configuration diagram of a modification of the ion analyzer illustrated in Fig. 2.
[Fig. 4] A schematic configuration diagram of a modification of the ion analyzer illustrated in Fig. 2.
[Fig. 5] A schematic configuration diagram of a modification of the ion analyzer illustrated in Fig. 2.
[Fig. 6] A schematic configuration diagram of a modification of the ion analyzer illustrated in Fig. 1.
[Fig. 7] A principle explanatory diagram of an ion analysis method according to the present invention.
[Fig. 8] An explanatory diagram of a method of calculating a moving velocity of an ion in a case where actions by gravity and an electric field and an action by diffusion are simultaneously present.
[Fig. 9] An explanatory diagram of an example of a method of calculating valences of ions.
[Fig. 10] A graph showing a relationship between the valences of ions in Fig. 9 and moving distances in the horizontal direction.

DESCRIPTION OF EMBODIMENTS

[1] Principle of Ion Analysis Method in Present Invention

[1-1] Conventional Reference Techniques and Their Problems

What is important in identifying a substance is the molecular weight of a component constituting the substance, and what needs to be known by an ion analyzer including a mass spectrometer is the masses of ions derived from the component. However, one of problems in a case where ions of macromolecules such as viruses and nanomedicine (nanotechnology-applied preparations), typically ions of molecules having masses at the MDa (= $10^6$Da) level (herein-after, the ions of viruses and these macromolecules are collectively referred to as "ions of macromolecules", and "Ions of macromolecules" as used herein include adduct ions and fragment ions generated at the time of ionization, and product ions generated by collision-induced dissociation (CID) or the like) are to be measured by a conventional common mass spectrometry technology is difficulty in determining the valences due to too wide distribution of the valences of the ions. It may be sufficient as a measurement result only by determining the valences of the ions, that is, the charges. Therefore, here, it is considered to acquire one or both of the masses and charges of ions of macromolecules.

Since ions are a kind of particle and ions of macromolecules can be regarded as particles, the inventor of the present application first conceived to apply the Millikan's oil droplet experiment to the measurement of the charges of ions of macromolecules. However, for the following reasons, the measurement of charges of the charged oil droplets in the Millikan's oil droplet experiment cannot be directly used for the charge measurement of ions.

In the Millikan's oil droplet experiment, a relationship between drop velocity v of the charged oil droplet and strength E of the electric field is obtained by measurement, and the relationship is expressed by a linear equation $v = \alpha E - v_0$. That is, even if the number of pieces of the measurement data is increased, the obtained information consists of two items: the slope $\alpha$ and the Y intercept $-v_0$ of the linear equation. On the other hand, since a friction coefficient k of air resistance is involved in the motion of the fine particle observed in the Millikan's oil droplet experiment, the number of unknown quantities to be known is three (charge q, mass m, and friction coefficient k). That is, the number of pieces of information obtained by the measurement is one less than the unknown quantities. In fact, in the Millikan's oil droplet experiment, since the material of the fine particle is known, its density $\rho$ is known, a radius r of the fine particle is obtained from the mass m, and the friction coefficient k can be calculated from the radius r according to Stokes' law of fluid dynamics. As described above, in the Millikan's oil droplet experiment, the mass m and the charge q are determined separately by reducing one unknown quantity. In other words, in the Millikan's oil droplet experiment, it is not possible to determine the mass of the measurement target whose material is unknown (that is, the friction coefficient k is unknown).

[1-2] Diffusion Motions of Ions

On the other hand, the inventor of the present application has focused on the fact that in a case where ions of macromolecules are caused to drop by the action of gravity, the ions are fine particles in gas, and a diffusion motion occurs in addition to the motion by the action of gravity. In particular, here, Brownian motion which occurs as a result of the collision of gas whose temperature is known with the fine particle is utilized. The diffusion coefficient is obtained by observing Brownian motion of an ion when the ion drops in a space where a gravity field or both the gravity field and an electric field act and gas exists, and the mass of the ion can be determined from the result. Note that, in actual measurement, since the diffusion motion and the drift motion due to the action of the gravity field and/or the electric field occur at the same time, the motion of the ion needs to be treated as a diffusion drift combining them.

In general, it is known that a diffusion coefficient D in Brownian motion of a fine particle in gas is represented by the Einstein relation, which is a historical first example of the fluctuation-dissipation theorem (Non Patent Literature 4). This equation is shown in (1). Here, $k_B$ is a Boltzmann constant, and T is an absolute temperature of the gas. $\mu$ is called mobility, and corresponds to a speed generated in a case where a force of a unit size acts. Therefore, $\mu$ and the friction coefficient k due to air resistance have a relationship of $\mu = 1/k$.

$$D = \mu k_B T = k_B T/k \quad ...(1)$$

When this equation (1) is transformed, the following equation (1A) is obtained.

$$kD = k_B T = [\text{constant}] \quad ...(1A)$$

Equation (1A) means that the diffusion coefficient D decreases as the friction coefficient k increases, and that the friction coefficient k is decreased in order to increase the diffusion, which is also consistent with the physical image. Equation (1A) does not include information on atoms and molecules constituting the gas, which is presumed to be because the fluctuation-dissipation theorem is a law that holds as an average on a sufficiently long time scale as compared with the time when the gas and the fine particle collide. In this case, it can be presumed that, for a light gas such as helium He or hydrogen $H_2$, the law is more likely to hold.

Here, since diffusion drift of the fine particle under reduced pressure (however, gas is present) is also handled, it is necessary to grasp a change in the friction coefficient k when a pressure p changes (dependency of the friction coefficient k on the pressure p). Although this relationship is not directly proportional, it can be presumed that this relationship is a monotonically increasing relationship in which the friction coefficient also increases as the pressure increases. However, when the pressure approaches 1 atm, it is considered that the friction coefficient is saturated and hardly changes. That is, when the pressure p increases and the mean free path of the gas is smaller than the particle size and can be regarded as a fluid, it is presumed that the friction coefficient becomes constant due to the Maxwell's kinetic theory of gases. On the other hand, it is also obvious that k = 0 at p = 0.

Strictly speaking, it is desirable to investigate the pressure dependency of the friction coefficient k by an experiment, but the pressure dependency can be presumed on the basis of a result of trajectory simulation of the fine particle. In this simulation, the diffusion coefficient D can be determined from equation (1) by assuming the value of the friction coefficient k, and the trajectory of the fine particle can be predicted by giving an appropriate initial value and solving a motion equation with a random walk. That is, by adjusting the friction coefficient k as a parameter in simulation so as to reproduce the experimental result, it is possible to presume the value of the friction coefficient k which is considered to depend on the pressure and the gas type.

Next, feasibility of actual measurement of the diffusion coefficient D based on the observation result with a microscope as used in the Millikan's oil droplet experiment will be described.

In the experimental verification by Perrin in which Brownian motion was experimentally verified, the motions of fine particles (radius: 213 nm) in a solvent such as water are observed with a microscope. The observed diffusion distance at this time is approximately 9 um in 30 seconds. Based on this result, how much particles of about the same size diffuse in gas during a measurement time of 0.3 seconds is estimated. Theoretically, since a diffusion distance x at an elapsed time t is $x = \sqrt{(2Dt)}$, and the diffusion coefficient in the liquid is $10^{-4}$ times the diffusion coefficient in the gas, it should be about 90 um. This is an optically sufficiently discriminable size. For even smaller particles like viruses, the diffusion distance should be longer.

As an example, performing microscopic observation is assumed. Assuming that only diffusion motion strictly occurs in the horizontal direction (direction orthogonal to gravity), the distance x by which the fine particles move in the horizontal direction during a time $\Delta t$ is expressed by the following equation (2) as an average.

$$x = \sqrt{(2D\Delta t)} \quad ...(2)$$

Therefore, in a case where the distance by which the particles move in the horizontal direction is examined every moment at regular time intervals $\Delta t$, and measurement results of $x_1, x_2, x_3, ..., x_n$ are obtained, a mean square value $x_{av}^2$ is expressed by equation (3).

$$x_{av}^2 = (x_1^2 + x_2^2 + x_3^2 + ... + x_n^2)/n \rightarrow 2D\Delta t(n \rightarrow \infty) \quad ...(3)$$

That is, the measurement accuracy can be improved by repeatedly measuring the moving distance of the particles.

In conclusion, it is sufficiently possible to obtain the diffusion coefficient D on the basis of information obtained by observing Brownian motion of ions of macromolecules. In particular, it can be said that the accuracy of the diffusion coefficient D can be improved by repeatedly measuring the moving distance of ions over a certain period of time.

[1-3] Measurement of Mass Using Diffusion Motion and Drift Motion

Next, a method of measuring the mass m of an ion in a case where there are the diffusion motion described above and the drift motion due to the actions of gravity and an electric field will be described. First, a case where the direction of the action of the electric field is opposite to the direction of the action of gravity is considered.

A drift motion of ions due to a gravity field is first considered. A terminal velocity $v_0$ in the vertical direction of a fine particle in the electric field of zero is expressed by the following equation (4) since [air resistance $kv_0$] = [gravity mg].

$$v_0 = mg/k \quad ...(4)$$

When this is combined with the fluctuation-dissipation theorem, equation (5) is obtained.

$$m = v_0 k_B T/(Dg) \quad ...(5)$$

Equation (5) means that the mass m is obtained from the measurable quantities $v_0$ and D. As described above, the diffusion coefficient D can be obtained on the basis of the observation of the motion of the ion in the horizontal direction (= only the diffusion motion), and the terminal velocity $v_0$ can be obtained on the basis of the motion of the ion in the vertical direction (= the motion due to the diffusion motion and the action of the gravity field) that occurs at the same time. As a result, the mass m of the ion can be obtained.

Note that, in order to obtain the accurate mass m from equation (5), the value of gravitational acceleration g also needs to be accurate. As is well known, the gravitational acceleration g varies considerably depending on the latitude and altitude of the measurement point, but an accurate value can be used depending on the measurement point. For example, in a case where it is possible to obtain the m/z value (however, the valence z is unknown) of the target ion using another mass spectrometer, even in a case where the accuracy of the value of the mass m is low, it is possible to estimate the value of z from the low-accuracy mass m and the accurate m/z value and to calculate the accurate mass m.

In the method for measuring the mass m of an ion described above, it is sufficient that the diffusion coefficient D or the friction coefficient k of the ion can be measured in addition to the terminal velocity $v_0$ of the ion. For that purpose, the necessary premise is as follows.

· The temperature in the moving space for ions is constant and in thermal equilibrium.
· The velocity of the particle in the moving space is sufficiently low, and a proportional relationship between the frictional force and the velocity is established.

As long as the above premise is satisfied, there are substantially no limitations and restrictions caused by the apparatus, such as restrictions on charge resolution due to the ion trajectory in CDMS.

Here, as an example, a method for increasing the measurement accuracy in the case of performing microscopic observation will be described. In order to increase the measurement accuracy in this measurement technique, it is desirable that the fine particle stay in the field of view of the microscope as long as possible. The first reason is that it is difficult to increase the measurement accuracy of the terminal velocity $v_0$ in the electric field of zero when the drop time is too short. The second reason is that when the stay time is short, the number of pieces of data for obtaining the diffusion coefficient D is small, and it is difficult to increase the accuracy of the diffusion coefficient D. That is, in this measurement technique, from the viewpoint of measurement accuracy, a situation where the drop velocity of the fine particle is as small as possible is desirable. Of course, in practical use, when the drop velocity is small, the throughput of measurement decreases accordingly, and thus it is necessary to consider a balance between accuracy and throughput. In order to set the condition that the drop velocity becomes small, the strength of the electric field that attracts the ion vertically upward may be adjusted to substantially cancel the action of gravity.

In a state where the action of gravity is completely canceled by the electric field, that is, in a pseudo zero gravity (floating) state, the following equation (6) is established.

$$0 = mg + qE_0 \rightarrow m/q = -E_0/g \quad ...(6)$$

That is, at this time, the specific charge m/q can be obtained.

In a case where an electric field of strength E ($\approx E_0$) is formed to reduce the drop velocity of the ion, formula (7) is established.

$$kv = mg + zE \rightarrow m = vk_BT/(g_aD) \quad ...(7)$$

Here, $g_a = g(1-E/E_0)$ is an apparent effective gravitational acceleration.

Incidentally, when the electric field strength E = 0, equation (7) is expressed as

$$kv_0 = mg \rightarrow m = v_0k_BT/(gD)$$

and is consistent with the above equation (5). By setting $v \ll v_0$, that is, by taking time for the measurement, the measurement accuracy can be increased. This is similar to CDMS.

Note that, in a zero gravity (floating) state as shown in equation (6), movement of the ion is caused only by diffusion motion, and thus, it is possible to apply dynamic light scattering (hereinafter abbreviated as DLS) described in Non Patent Literature 6 or the like. DLS is one of general-purpose techniques in measurement of the particle diameter of fine particles, and irradiates the fine particles floating in a solution with laser light to measure the particle diameters of the fine particles. Specifically, laser light is made incident on a moving space for fine particles at a predetermined angle, scattered light from the fine particles emitted from the moving space at a constant angle is detected by a photon counting method, and a temporal change in intensity of the scattered light is recorded. Then, an autocorrelation function is obtained from the temporal change in the intensity of the scattered light, and a diffusion coefficient is calculated from the relaxation rate (reciprocal of relaxation time), and a hydrodynamic particle diameter is calculated from the Stokes-Einstein equation representing the relationship between the diffusion coefficient and the particle diameter. In principle, since the diffusion distance required for the measurement is about the wavelength of the laser light, the moving space is small and the measurement time can be shortened as compared with the case of directly observing Brownian motion.

The above description relates to a case where the direction of the action of the electric field is opposite to the direction of the action of gravity, but in practice, the direction of the action of the electric field is not limited to that direction. That is, an angle θ formed between the direction of the action of the electric field and the direction of the action of gravity is arbitrary between 0° to 180°. This will be described below. Now, it is assumed that the gravitational acceleration $g\uparrow$ (here, $*\uparrow$ represents a vector of *) acts in the direction of the action of gravity, the electric field $E\uparrow$ acts in the direction of the action of the electric field, and $g\uparrow$ and $E\uparrow$ as vectors form the arbitrary angle θ.

In a steady state where the above-described gravity field and electric field are present, the ions have a constant velocity (vector) $v\uparrow$. In this case,

$$kv\uparrow = qE\uparrow + mg\uparrow \quad ...(8)$$

Therefore, the following equation (9) is obtained.

$$v\uparrow = (q/k)E\uparrow + (m/k)g\uparrow \quad ...(9)$$

As described above, the number of unknown quantities to be known is three (q, m, k), whereas only two parameters of (q/k) and (m/k) appear in equation (9), and both q and m are not determined when the diffusion coefficient D is unknown as described above.

Therefore, the velocity v↑ and the diffusion coefficient D of the ion are obtained as follows.

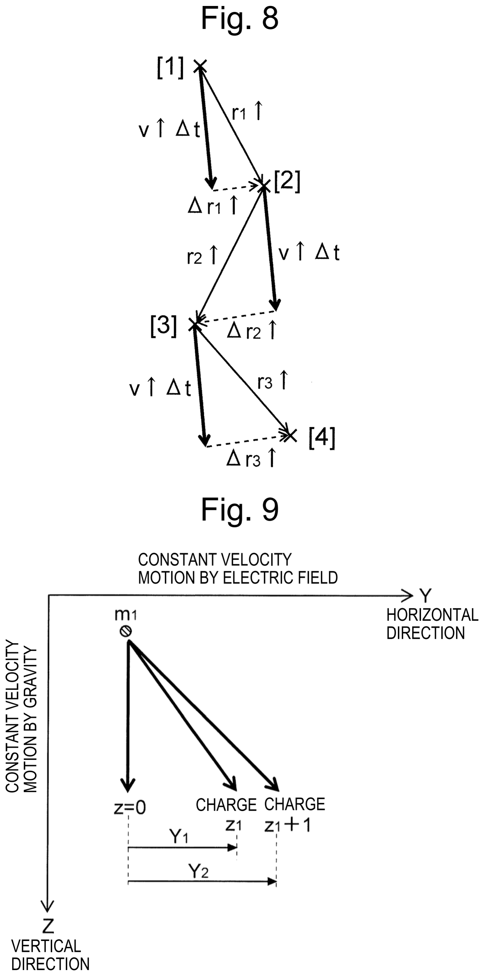

Assuming that the drift motion due to the actions of gravity and the electric field is a uniform linear motion, the velocity vector v↑ that fits the measurement data is determined using the least squares method as follows. Fig. 8 is a diagram illustrating an example of a movement trajectory of an ion. As illustrated in Fig. 8, it is assumed that the ion has moved in the order of [1] → [2] → [3] → [4] →... at regular time intervals Δt. Assuming the velocity vector v↑, the residual vector at each time interval Δt is calculated as follows.

$$\Delta r_1\uparrow = r_1\uparrow - v\uparrow\Delta t$$

$$\Delta r_2\uparrow = r_2\uparrow - v\uparrow\Delta t$$

$$\Delta r_3\uparrow = r_3\uparrow - v\uparrow\Delta t$$

...

The square sum $R^2$ of the absolute value of the residual vector is calculated, and the velocity vector v↑ that minimizes the square sum $R^2$ is searched.

$$R^2 = \left|\Delta r_1\uparrow\right|^2 + \left|\Delta r_2\uparrow\right|^2 + \left|\Delta r_3\uparrow\right|^2 + ...$$

In this case, since the relationship between the velocity and the residual is linear, the only solution can always be obtained as the velocity vector v↑.

When the velocity vector v↑ is obtained, the diffusion coefficient D is then obtained.

Only accidental components remain in the residual vectors $\Delta r_1\uparrow$, $\Delta r_2\uparrow$, $\Delta r_3\uparrow$, ... obtained as a result of the least squares method, which can be considered to be a random walk. Therefore, the diffusion coefficient D can be obtained from the analysis of the residual vector.

Specifically, when $\Delta r_i\uparrow = (\Delta x_i, \Delta y_i)$, the probability density function should follow a two-dimensional normal distribution $\{\exp[-(\Delta x_i)^2/(4D\Delta t)]\} \times \{\exp[-(\Delta y_i)^2/(4D\Delta t)]\}$. Therefore, most simply, it can be assumed that the average value of $|\Delta r_1\uparrow|^2$ is $4D\Delta t$, and the diffusion coefficient D can be obtained from this.

In this way, regardless of the direction of the action of the electric field, the velocity and the diffusion coefficient of the ion can be obtained from the measurement data obtained by observing the movement trajectory of the ion, and the mass m can be calculated.

As described above, the terminal velocity $v_0$ of the ion can be obtained by two methods of (a1) direct observation of the ion by a microscope and (a2) position measurement by a laser, and the diffusion coefficient D can be obtained by two methods of (b1) direct observation by a microscope and (b2) DLS. Of course, the terminal velocity $v_0$ and the diffusion coefficient D of the ion may be obtained by a method other than the above-described method, and the mass m of the ion may be calculated using the terminal velocity $v_0$ and the diffusion coefficient D of the ion obtained by a combination of any of the methods.

[1-4] Measurement of Charge Using Electric Field in Horizontal Direction

In the above measurement technique, the electric field is used to adjust the drop velocity of the ions, but the electric field can be more actively used for the separation of the ions according to the charges or the valences. This is the second ion analysis method. In this method, for example, the m/z value of a target ion is obtained using a mass spectrometry part at a preceding stage such as a digital ion trap described later. However, in a case where the target ion is a multivalent ion, the valence z is unknown, and thus the mass m is not determined. If the valence z or the charge q of the target ion can be obtained by a technique different from mass spectrometry, the accurate mass m can be obtained. Therefore, as a technique derived from the first ion analysis method, a method obtained by two-dimensionally extending the technique in the Millikan's oil droplet experiment is used.

Typically, in this second analysis method, ions to be observed are caused to drop vertically downward at a constant velocity (terminal velocity) by gravity in a gas atmosphere, an electric field attracting ions in the horizontal direction is formed, and the ions are also moved at a constant velocity in the horizontal direction by the action of the electric field. As the gas used here, He is desirable. The reason is as follows.

Since the two electrons of He are strongly bound by the attractive force of the atomic nucleus, the change in the wave function due to the influence of the charge of an approaching ion is small. Therefore, it is appropriate to consider that the friction coefficient k generated from the collision phenomenon between He and the ion is hardly changed by the valence z of the ion (in the first place, Millikan himself obtains the elementary charge on the premise that the friction coefficient k does not depend on the valence z of the ion). Assuming that the friction coefficient k is constant regardless of the valence z, a velocity $v_h$ of the ion in the horizontal direction is expressed by the following equation (10).

$$kv_h = zeE \rightarrow v_h = zeE/k \quad ...(10)$$

That is, it is guaranteed that the velocity $v_h$ takes a discrete value at equal intervals.

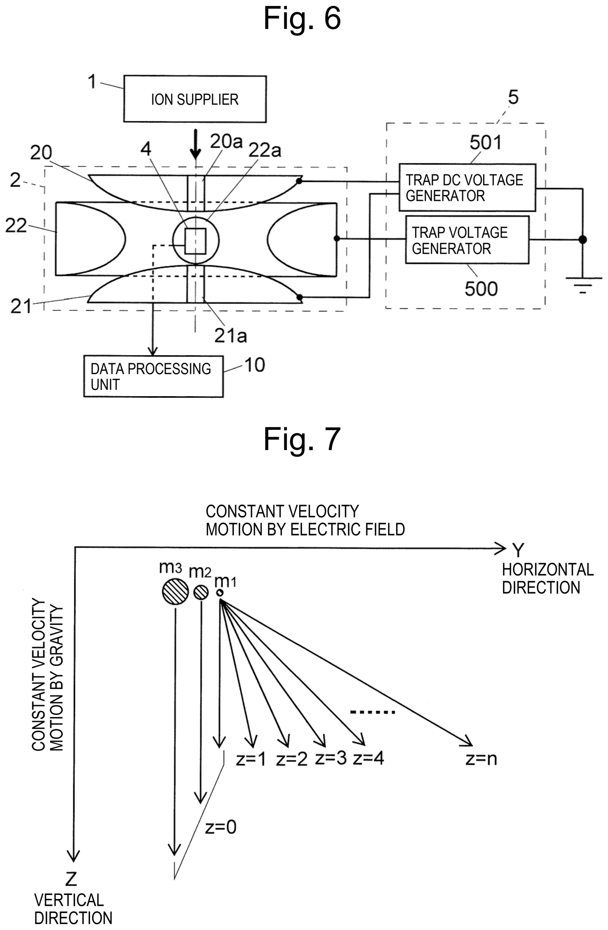

Fig. 7 is a diagram schematically illustrating behavior of ions in the second ion analysis method. As described above, the ions move at a constant velocity, that is, drop only by the action of gravity in the vertical direction (Z-axis direction). Since the velocity at this time depends on the size and weight of the particles, separation can be performed only by the size and weight of the particles. Specifically, ions having a larger mass (that is, a larger weight) and having a larger size (that is, a relatively smaller friction) drop at a larger velocity. On the other hand, the ions move at a constant velocity in the horizontal direction (here, the Y-axis direction) according to the valences z or the charges q. Therefore, the ions are discretely separated according to the valences z. That is, as illustrated in Fig. 7, if the masses of the dropping ions are the same, the ions reach different positions in the horizontal direction depending on the valence z. Specifically, the larger the valence z is, the farther the position in the horizontal direction the ion reaches. As a result, the target ions having various valences z can be separated for each valence according to the drop positions or according to the trajectories when dropping. For the simple purpose of separating ions for each valence or grasping whether or not ions of different valences exist, it is not necessary to obtain the valence of the individual separated ion.

One method for obtaining the valence of the individual separated ion is to examine in advance the relationship among the mass m and the valence z of the ion, the strength of the electric field, and the drop position of the ion by a preliminary experiment, and obtain the valence z of the target ion from the drop position of the ion using the information. The fact that the drop positions are different means that the angle formed by the line drawn by the movement trajectory of the ion with respect to the Z axis changes according to the valence z or the charge q. Therefore, for example, the valences z of the target ions can be estimated by calculation based on the drop positions of the ions as follows. Note that a condition under which the calculation can be performed here is that a plurality of ions derived from the same component and having different valences from each other by one are observed.

Now, as a simple example, as illustrated in Fig. 9, a case will be considered in which an observation result is obtained that ions derived from the same component, that is, ions having the same mass $m_1$ drop to two adjacent positions. In this case, since it is appropriate to consider that the valences of the ions dropped to different positions are different by one, the ion valence of one (closer to the vertically dropped position) is estimated as z, and the valence of the other ion is estimated as z+1.

As described above, based on the premise that the friction coefficient k hardly changes depending on the valence z of the ion (even if the friction coefficient k depends on the valence z of the ion, it can be considered that the change is considerably gentle and substantially non-existent), in the case of the same fine particles, even if the valence z is different, gravity and the frictional force received in the vertical direction Z are the same, and thus the fine particles should reach the same vertical coordinate Z when the drop time is the same. On the other hand, for the horizontal coordinate Y, assuming that the friction coefficients are the same on the basis of the above premise, the fine particles should respectively reach horizontal positions proportional to the valences z.

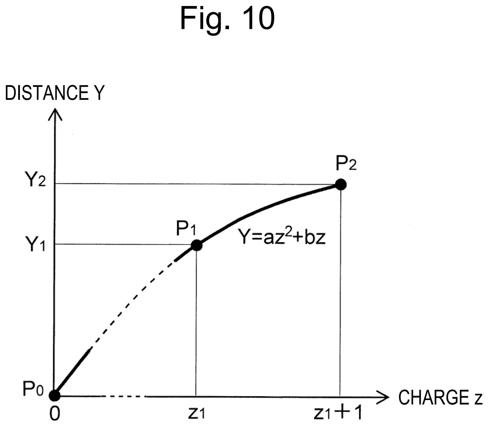

Thus, the relationship between the valence (charge) z of the ion and the moving distance y in the horizontal direction is graphed as illustrated in Fig. 10. As can be seen from Fig. 10, the quadratic function $y = az^2 + bz + c$ (however, since it passes through the origin, automatically c = 0) should be uniquely determined by the three pieces of data obtained by adding a point $P_0$ at z = 0 to two points $P_1$ and $P_2$ corresponding to $z_1$ and $z_1+1$, respectively. Under the above premise, the valence z is obtained such that the quadratic function is in a state closest to a straight line, and it is considered that a valence $z_1$ that minimizes the absolute value |a| of the coefficient of the quadratic term of the quadratic function is the most appropriate estimated value. Since this $z_1$ is naturally a natural number, it is obvious that the search is extremely easy. In this way, from the drop positions of two ions having different valences by one, the valences z of the ions can be estimated.

Even when three or more ions having different valences by one are observed, that is, in a case where there are three or more drop positions, calculation can be performed by extending the above idea. One method considered to be most versatile is a method using a spline curve instead of a quadratic function. In this case, the condition of the smoothest curve through two or more data points is ensured by the minimum elastic energy. Therefore, it is considered that the most appropriate valence $z_1$ can be easily searched by using the spline curve.

In a case where there are a large number of drop positions and there are a plurality of types of fine particles, the interval between bright spots on the observation indicating the positions of the fine particles appears not to be constant, and there is a possibility that it is difficult to determine the charge by the spline curve. However, the Fourier transform method can be used as a technique capable of performing powerful and high-speed analysis even in such a complicated situation.

Describing referring to Fig. 9, on the horizontal line where Y = constant, bright spots should be arranged at substantially equal intervals (ΔZ) in the Z direction in a case where the valences z are different in the same fine particles. Then, if the light intensity distribution of the bright spots is Fourier-transformed along the horizontal line where Y = constant, peaks appear at discrete frequency positions of $2\pi/\Delta Z$, $4\pi/\Delta Z$, $6\pi/\Delta Z$, .... As a result, not only the value of ΔZ but also bright spots that greatly contribute to the peak of the Fourier transform can be specified, and the spline curve can be used on the basis of these bright spots. Furthermore, if the position of the horizontal line where Y = constant is shifted in the vertical direction (up-down direction), the value of ΔZ should also change linearly. Therefore, it is possible to determine the charges of target fine particles (ions) by maximally utilizing two-dimensional information of an image obtained by observing bright spots.

[1-5] Examination of Appropriate Analysis Conditions

In each of the first and second ion analysis methods described above, analysis conditions that are advantageous for increasing measurement accuracy are examined.

Here, the distance by which the target ion moves at a drift velocity v during the time t is vt, and the distance by which the ion moves by the diffusion motion within the same time t is $\sqrt{(2Dt)}$. Therefore, the ratio R (= [drift distance]/[diffusion distance]) of vt and $\sqrt{(2Dt)}$ is expressed by the following equation (11).

$$R = vt/\sqrt{(2Dt)} = (v\sqrt{t})/\sqrt{(2D)} = (mg_a\sqrt{t})/(k\sqrt{(2D)}) = (mg_a\sqrt{t})/\sqrt{(2kk_BT)} \quad ...(11)$$

Therefore, since an advantageous condition for improving the accuracy in the first ion analysis method is the direction of increasing the diffusion distance, that is, R→0, it is important to bring apparent effective gravitational acceleration $g_a$ close to 0 (bring close to the zero gravity, floating state). On the other hand, an advantageous condition for improving the accuracy in the second ion analysis method is a direction in which the drift distance is lengthened, that is, R→∞, and thus it is effective to reduce the friction coefficient k, that is, to reduce the gas pressure (increase the degree of vacuum).

Next, the configurations and operations according to embodiments of ion analyzers respectively using the first ion analysis method and the second ion analysis method described above will be described.

[2] Ion Analyzer According to First Embodiment

[2-1] Configuration

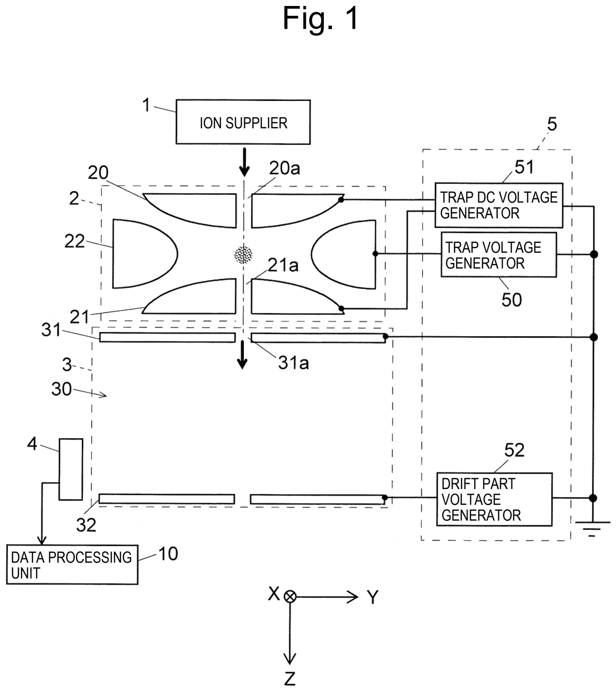

Fig. 1 is a schematic configuration diagram of an embodiment of an ion analyzer using the first ion analysis method.

The ion analyzer includes an ion supplier 1, an ion trap 2, an ion drift part 3, a detection unit 4, a voltage generator 5, and a data processing unit 10. Although not illustrated, at least the ion trap 2 and the ion drift part 3 are disposed in a vacuum chamber, and the inside of the vacuum chamber is evacuated by a vacuum pump so as to have a predetermined gas pressure. The ion trap 2 and the ion drift part 3 can be configured to be disposed in different vacuum chambers having different degrees of vacuum.

For convenience of description, in Fig. 1, three axes of X, Y and Z orthogonal to each other are defined within the space. The Z-axis direction is a direction of an action of gravity, that is, a vertical direction.

The ion supplier 1 generates ions to be measured, and typically includes an ion source that ionizes components in a sample. The ionization method in the ion source is not particularly limited. For example, in a case where the sample is a liquid sample, a technique of ionizing sample components under atmospheric pressure, such as an electrospray ionization method, an atmospheric pressure chemical ionization method, or a probe electrospray ionization method, can be used. In addition to the ion source, the ion supplier 1 can also include an ion dissociation part such as a collision cell which dissociates ions generated in the ion source by an appropriate technique, for example, collision-induced dissociation.

The ion trap 2 has a function of temporarily trapping ions to be observed and defining an initial position when the ions are caused to drop. In addition, although this is not essential, the ion trap 2 can have a function of limiting the m/z or m/z range of ions to be dropped by distinguishing ions according to m/z as necessary. This ion distinguishing function according to m/z is important in a case where complex molecules having various ion masses m and charges q are to be measured.

It is sufficient that the ion trap 2 can realize the above-described function. Here, the ion trap 2 is a three-dimensional quadrupole ion trap (also referred to as Paul trap) including a ring electrode 22 having a rotational hyperboloid whose symmetry axis extends in the Z-axis direction, and a pair of end cap electrodes 20 and 21 disposed to vertically face each other with the ring electrode 22 interposed between them. An ion incident opening 20a is bored in the upwardly disposed incident-side end cap electrode 20, and an ion emission opening 21a is bored in the downwardly disposed emission-side end cap electrode 21. However, in such a three-dimensional quadrupole structure, it is known that the ring electrode 22 can be replaced with a cylindrical electrode, and the end cap electrodes 20 and 21 can be replaced with flat-plate electrodes, and an ion trap having such a simpler structure may be adopted.

The system and type of the ion trap 2 are not particularly limited, and may be a two-dimensional ion trap in addition to a three-dimensional quadrupole ion trap. Here, a digital ion trap using a rectangular wave RF voltage as an RF voltage for forming a trapping electric field (see Non Patent Literature 5 and the like) is used, but an analog ion trap using a sinusoidal RF voltage may be used. However, in order to efficiently trap ions of macromolecules, it is desirable to reduce the frequency of the RF voltage as much as possible using the digital ion trap. In the digital ion trap, there is also an advantage that ions of a specific m/z range can be selected with high resolution in a short time by using rough isolation and forward/reverse scanning. As described later, in order to limit the initial positions of ions before dropping, it is desirable to use a three-dimensional ion trap capable of keeping ions in a narrow region.

The ion drift part 3 provides a space in which ions drop by the action of gravity and move by Brownian motion. In the space, the gas pressure (or degree of vacuum) and the temperature are managed with high accuracy. Here, the ion drift part 3 includes a pair of flat-plate electrodes 31 and 32 placed so as to be vertically separated at predetermined intervals, and an ion moving space 30 in which ions move is formed between the flat-plate electrodes 31 and 32. In the upper flat-plate electrode 31, an ion passing opening 31a is bored at a position corresponding to the ion emission opening 21a of the ion trap 2.

The detection unit 4 is an optical detection means capable of detecting ions moving in the ion moving space 30. In a case where ions of viruses or macromolecules are to be observed, a method of irradiating the measurement targets with light having a predetermined wavelength and detecting the scattered light can be adopted. Since the size of the detectable particle at that time depends on the wavelength of light to be used, smaller particles to be measured can also be detected by using a light source that generates light having a short wavelength (for example, an LED of 265 nm used exclusively for disinfection). When a large number of ions are simultaneously observed in a wide region, a sheet laser used for fluid visualization or the like can be used.

The voltage generator 5 includes a trap voltage generator 50 which applies a predetermined voltage to the ring electrode 22 of the ion trap 2, an end cap voltage generator 51 which applies a predetermined voltage to each of the end cap electrodes 20 and 21, and a drift part voltage generator 52 which applies a predetermined voltage to the flat-plate electrode 32 of the ion drift part 3. In Fig. 1, the flat-plate electrode 31 is grounded and has a potential of zero, but a predetermined voltage other than zero may also be applicable to the flat-plate electrode 31.

The data processing unit 10 is mainly configured by a computer including, for example, a CPU, and processes a detection result (observation image data or measurement data) obtained by the detection unit 4.

[2-2] Analysis Operation

An example of an analysis operation by this ion analyzer will be described.

The ion supplier 1 ionizes molecules contained in the provided sample. Here, the molecules are assumed to be, for example, viruses or macromolecules. Ions generated by the ion supplier 1 are introduced into the internal space of the ion trap 2 through the ion incident opening 20a via an ion guide (not illustrated) or the like. At the time of introduction of the ions, a DC voltage having the same polarity as that of the ions is applied to the emission-side end cap electrode 21. As a result, the ions introduced into the internal space receive a force directed substantially in the negative direction of the Z axis (that is, upward) by the electric field formed in the internal space of the ion trap 2, and are prevented from being discharged from the ion emission opening 21a. In addition, a rectangular wave RF voltage of a predetermined frequency is applied from the trap voltage generator 50 to the ring electrode 22 simultaneously with or later than the ion introduction, and ions are trapped in the internal space by the ion trapping electric field formed in the internal space.

After the ions are introduced into the internal space of the ion trap 2 and trapped by the electric field, a gas supplier (not illustrated) introduces a predetermined inert gas into the internal space as a cooling gas. The trapped ions come into contact with the cooling gas and lose kinetic energy, and gather near the center of the ion trap 2. After cooling is performed for a predetermined time, the trap voltage generator 50 stops applying the rectangular wave RF voltage to the ring electrode 22. As a result, the electric field acting on the ions gathered in the internal space of the ion trap 2 near the center of the internal space disappears, and the ions drop by gravity and sequentially pass through the ion emission opening 21a and the ion passing opening 31a to drop into the ion moving space 30. At this time, a DC voltage may be applied to the two end cap electrodes 20, 21 so that a DC electric field is formed between the electrodes 20, 21 to accelerate the ions. In the digital ion trap, by appropriately controlling the phase of the voltage when the application of the trapping voltage is stopped, the initial positions of the ions inside the ion trap 2 can be aligned or set to an optimum initial position.

A predetermined gas of high purity is introduced into the ion moving space 30, and the gas pressure, that is, the density of the gas molecules is controlled with high accuracy. The temperature of the ion moving space 30 is also controlled with high accuracy. The ions introduced into the ion moving space 30 repeatedly come into contact with gas molecules whose density and temperature are controlled with high accuracy. Therefore, the input individual ions diffuse while performing Brownian motion. The detection unit 4 acquires data including information indicating the position of the individual ion, for example, at regular time intervals. The data processing unit 10 calculates the moving distance in the horizontal direction per predetermined time for each ion on the basis of this data. As a result, since the mean square value of a moving distance x in the horizontal direction due to Brownian motion as described above is obtained, the diffusion coefficient D of the ion is calculated from this information.

Gravity acts on the ions in the ion moving space 30, and each ion moves (drops) in the Z-axis direction by the action of gravity. That is, the ion performs a drift motion due to a gravity field. When the voltage applied from the drift part voltage generator 52 to the flat-plate electrode 32 is set to zero, the electric field acting on the ions in the ion moving space 30 becomes zero. As described above, the terminal velocity $v_0$ of the ion in the vertical direction at this time can be calculated on the basis of, for example, information indicating the position of the individual ion at regular time intervals obtained by the detection unit 4. In this manner, the data processing unit 10 calculates the terminal velocity $v_0$ and the diffusion coefficient D of the individual ion on the basis of the measurement data obtained by the detection unit 4, and further calculates the mass m of the ion from these values using the above equation (6).

The value of the gravitational acceleration g used for the calculation of the mass can be, for example, any of a preset default value, a value selected according to gravity-related information such as the longitude and altitude of the measurement point input by the user, a value input by the user, or the like.

The measurement of the mass m of the ion as described above in the ion analyzer of the present embodiment can be performed without forming an electric field in the ion moving space 30. As described above, by applying an appropriate voltage from the drift part voltage generator 52 to the flat-plate electrode 32 and forming an electric field in the ion moving space 30 so as to substantially cancel the action of gravity, it is possible to decrease the drop velocity of ions and improve the measurement accuracy.

By applying an appropriate voltage from the drift part voltage generator 52 to the flat-plate electrode 32 to form a predetermined electric field in the ion moving space 30, the charge q (or the valence z) of the ion to be observed can be known. That is, in a case where there is no electric field, only the mass m of the ion can be obtained, but the charge q of the ion is also found by comparing the case without the electric field and the case with the electric field.

For example, when the velocity of the ion in the vertical direction in the case without the electric field is $v_0$ and the same velocity in the case with the electric field is v, the following equation (12) is established.

$$mg = kv_0 = kv - qE \rightarrow q = k \, (v - v_0)/E = (v - v_0)k_BT/(DE) \qquad ...(12)$$

The charge q can be obtained by using this equation (12). That is, in this ion analyzer, not only the mass m of the ion to be observed can be obtained without forming an electric field in the ion moving space 30, but also the charge q (or the valence z) of the ion can be obtained by using the observation result of the ion when an appropriate electric field is formed in the ion moving space 30.

As described above, it is also possible to calculate the mass m of the ion by calculating the velocity and the diffusion coefficient of the ion from the result of observing the movement trajectory of the ion in a state where the electric field is formed in the ion moving space 30 in this manner.

In addition, in the ion analyzer, a more accurate mass m can be obtained by combining with existing another mass spectrometer.

Specifically, m/z of an ion derived from target huge molecules is obtained using another mass spectrometer. However, since the valence z is unknown at this time, m cannot be obtained from m/z. On the other hand, when an ion derived from the same molecules is measured as described above using the ion analyzer in the above-described manner, the mass (approximate value) m is found nonetheless the value is not accurate (at least the accuracy is lower than that of above-described another mass spectrometer). Since an approximate value of m/z in a case where the value of z from the mass (approximate value) m is assumed can be obtained, the value of the valence z can be determined from the approximate value of m/z and the accurate value of m/z in which the valence z is unknown. As a result, an accurate mass m can be obtained from the accurate value of m/z.

In the ion analyzer of the present embodiment, a plurality of cameras disposed so as to be able to photograph a wide range in the ion moving space 30 from various angles is used as the detection unit 4, and it is possible to obtain information regarding a movement situation of each ion and a change in position by examining a correlation with respect to a plurality of observation images obtained by the plurality of cameras. As a result, it is possible to accurately track trajectories of a plurality of ions dropping simultaneously, and it is easy to comprehensively measure a large number of ions. In addition, by photographing the observation image of the ions in the internal space of the ion trap 2 together, it is also possible to correct the difference in the initial position at the time of dropping and increase the measurement accuracy.

[3] Ion Analyzer According to Second Embodiment

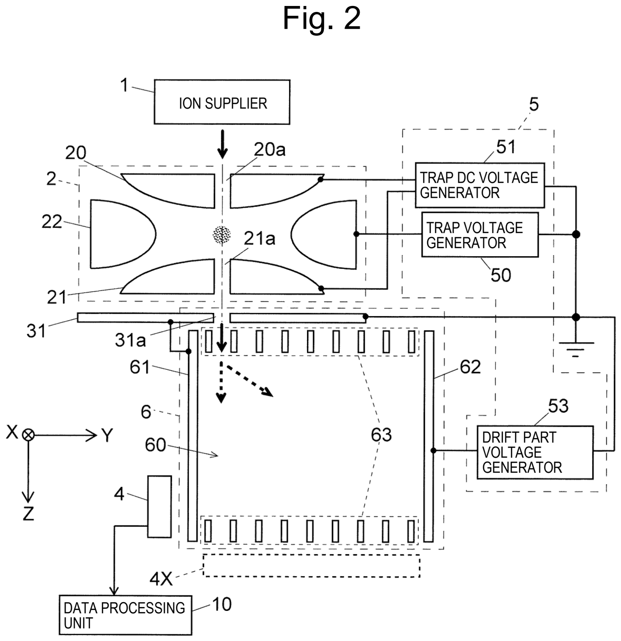

Fig. 2 is a schematic configuration diagram of an embodiment of an ion analyzer using the second ion analysis method.

In the ion analyzer of the first embodiment described above, in order to obtain the diffusion coefficient D of an ion, it is necessary to observe Brownian motion of the ion dropping due to the action of gravity or the actions of gravity and an electric field. On the other hand, in the ion analyzer of the second embodiment, ions are spatially separated according to the charges or the valences by using an electric field.

In Fig. 2, components that are the same as or substantially the same as those of the ion analyzer of the first embodiment are denoted by the same reference numerals, and detailed description of the components is omitted. In the ion analyzer of the second embodiment, an ion drift part 6 includes a pair of flat-plate electrodes 61 and 62 disposed so as to be separated in the Y-axis direction (more precisely, in the direction placed on the X-Y plane) at predetermined intervals, and an ion moving space 60 is formed between the flat-plate electrodes 61 and 62. One flat-plate electrode 61 is grounded, and when a predetermined voltage is applied from a drift part voltage generator 53 to the other flat-plate electrode 62, an electric field that attracts ions in the horizontal direction (Y-axis direction in this example) is formed in the ion moving space 60.

A plurality of auxiliary electrodes 63 are disposed between the pair of flat-plate electrodes 61 and 62. By applying a stepwise voltage lower (having a smaller absolute value) than the voltage applied to the flat-plate electrode 62 to each of the auxiliary electrodes 63, the strength in the horizontal direction of the electric field formed in the ion moving space 60 can be easily made substantially constant. However, the auxiliary electrodes 63 are not essential components.

In this ion analyzer, similarly to the ion analyzer of the first embodiment, when ions are sufficiently cooled in the ion trap 2 and the voltage application to the ring electrode 22 of the ion trap 2 is stopped, the ions drop from the ion trap 2 into the ion moving space 60. Gravity acts vertically downward and a force due to an electric field acts in the horizontal direction on each ion introduced into the ion moving space 60. Although the inside of the ion moving space 60 is depressurized, gas molecules exist at an appropriate density, and therefore ions drop at a velocity corresponding to the masses and sizes of the ions. At the same time, since a force due to an electric field having a certain strength acts on each ion in the horizontal direction, ions having a larger charge move a longer distance in the horizontal direction. Therefore, for example, even ions having the same mass m derived from the same molecules have different dropping trajectories when the charge q, that is, the valence z is different, and reach different positions in the horizontal direction.

A detection unit 4X is a detector capable of detecting the arrival of ions. As the detection unit 4X, a detector using a method similar to that of the detection unit 4 in the ion analyzer of the first embodiment, that is, an optical detection method can be used, and in particular, a detector using the above-described sheet laser is useful for detecting ions in a wide region. However, here, since it is not necessary to observe the exact motion of an ion such as Brownian motion, a detector using a simpler method may be used.

In a case where the electric field in the horizontal direction is weak, the moving distance of ions in the horizontal direction is short, and thus, the separability of ions by valence is low, but from the detection result by the detection unit 4X, it is possible to grasp the whole picture of a wide distribution of valences z. From this result, the dependency of the friction coefficient k on the valence z can also be analyzed. On the other hand, when the electric field in the horizontal direction is strengthened, it is difficult to grasp the whole picture of the valence distribution, but the separability according to the valences is high. That is, ions can be separated for each valence. Therefore, by providing an aperture or a slit at the bottom of the ion moving space 60, that is, at a specific position where dropping ions reach, it is possible to select only ions having a specific valence.

[4] Modifications of Ion Analyzer According to Second Embodiment

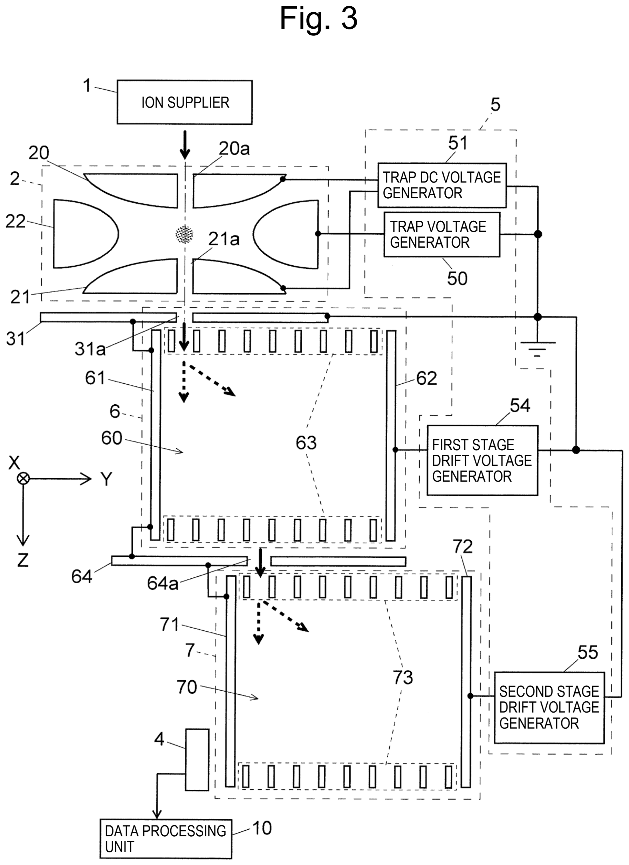

Fig. 3 is a schematic configuration diagram of a modification of the ion analyzer described above. In Fig. 3, components that are the same as or substantially the same as those of the ion analyzer of the second embodiment are denoted by the same reference numerals, and detailed description of the components is omitted.

As illustrated in Fig. 3, in this ion analyzer, at a subsequent stage of the ion drift part 6 that forms an electric field that attracts ions in the horizontal direction, an ion drift part 7 having the same configuration is provided. That is, the two ion drift parts 6 and 7 are cascade-connected. In the ion drift part 6 of the upper stage, ions are roughly separated according to the valences by a weak electric field in the horizontal direction. Since the separability here is relatively low, ions are not completely separated according to the valences, and ions of a specific valence range pass through an aperture opening 64a formed in an aperture plate 64 provided between the ion drift part 6 of the upper stage and the ion drift part 7 of the lower stage, and are introduced into the ion drift part 7 of the lower stage.

In the ion drift part 7 of the lower stage, the introduced ions are separated according to the valences with high separability by a strong electric field in the horizontal direction. As a result, also for multivalent ions having large valences, only ions having a specific valence can be selectively detected.

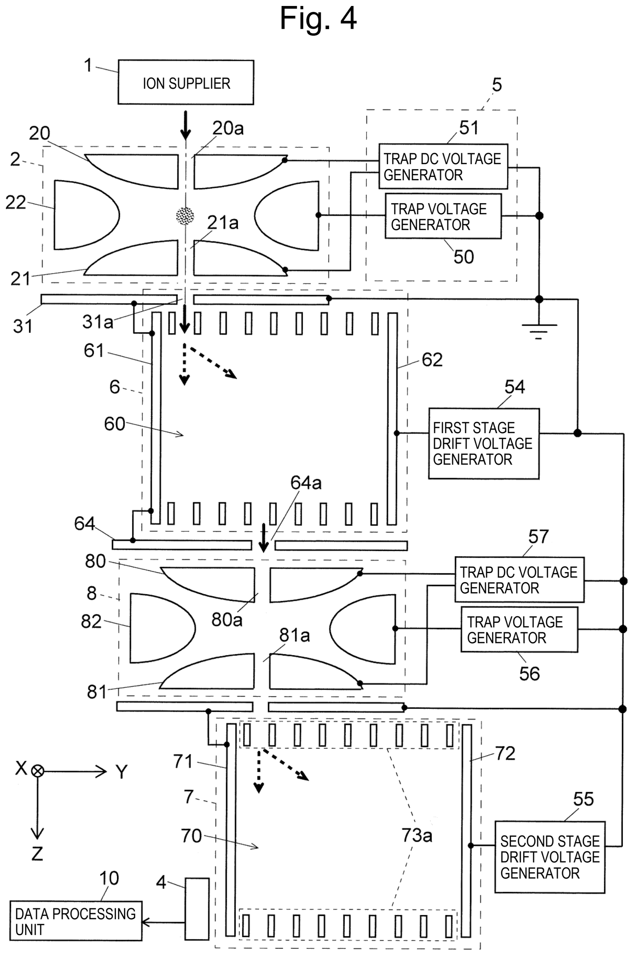

Fig. 4 is a schematic configuration diagram of a further modification of the ion analyzer illustrated in Fig. 3.

In this modification, another ion trap 8 having the same configuration as the ion trap 2 is disposed between the two cascade-connected ion drift parts 6 and 7. Ions of a specific valence range separated and selected by the ion drift part 6 of the upper stage are once trapped and cooled in the internal space of the ion trap 8. As a result, since the spread of the ions due to the diffusion generated during the drift in the ion moving space 60 of the ion drift part 6 is reset, the separation of the ions according to the valences in the ion drift part 7 of the lower stage is performed more accurately. As a result, the selectivity of ions having a desired valence is improved.

In the examples of Fig. 3 and Fig. 4, the direction of the action of the electric field in each of the two ion drift parts 6 and 7 is the Y-axis direction, but the directions do not have to be the same.

It is obvious that a configuration in which three or more ion drift parts are cascade-connected may be adopted.

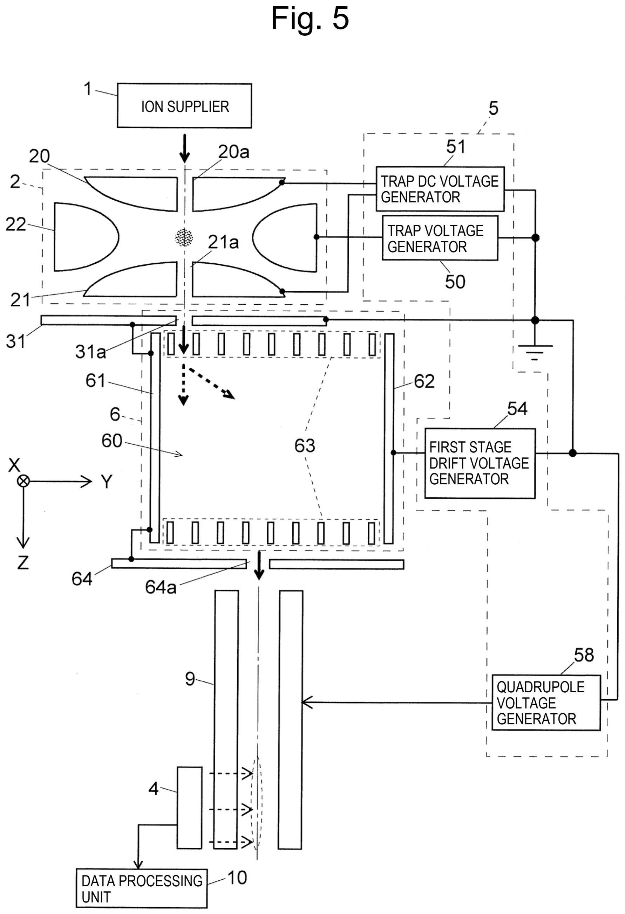

Fig. 5 is a schematic configuration diagram of a further modification of the ion analyzer illustrated in Fig. 3.

In this modification, only ions of a specific valence selected in the ion drift part 6 are introduced into a quadrupole mass separator 9. A quadrupole voltage generator 58 applies, to the quadrupole mass separator 9, a voltage that allows only ions having a specific m/z value to pass through the quadrupole mass separator 9 and allows other ions to diverge on the way. As described above, if ions have the same size and weight, only ions having a specific valence z are selected in the ion drift part 6 and pass through the aperture opening 64a. However, in a case where ions of various sizes and weights are introduced into the ion drift part 6, there is a possibility that ions other than ions having a target mass m and valence z also pass through the aperture opening 64a. On the other hand, in the modification illustrated in Fig. 5, only ions having a specific mass m and a specific valence z among ions having passed through the aperture opening 64a can be selected and detected by the quadrupole mass separator 9.

The ions selected by the quadrupole mass separator 9 can be detected using the detection unit 4 disposed to optically detect the ions passing through the space near the outlet in the quadrupole mass separator 9. In this case, since the space in which the ions can be detected can be secured relatively long in the passage direction of the ions, the ions can be more reliably detected.

[5] Ion Analyzer According to Third Embodiment

In the ion analyzer according to the first embodiment described above, the ion trap 2 for introducing ions into the ion moving space 30 and the ion drift part 3 are separated from each other. However, when the ion trap 2 and the ion drift part 3 are integrated, the configuration of the apparatus can be further simplified. Fig. 6 is a schematic configuration diagram of an ion analyzer of a third embodiment adopting such a configuration.

In this ion analyzer, an observation opening 22a is provided in a part of the ring electrode 22, and the internal space can be observed through the observation opening 22a from the detection unit 4 provided outside the observation opening 22a. By trapping and cooling the ions to be observed in the internal space of the ion trap 2, the ions are collected near the center of the internal space, and then the application of the trapping voltage is stopped. As a result, ions diffuse by Brownian motion in the internal space and drop by gravity. By appropriately adjusting the voltages applied to the end cap electrodes 20 and 21, an electric field can be formed so as to be substantially balanced with gravity. The diffusion motion of ions and the drift motion due to the actions of gravity and the electric field at this time are observed through the observation opening 22a, the diffusion coefficient D and the terminal velocity $v_0$ are calculated on the basis of the observation result, and the mass m is obtained on the basis of the calculation result. The ions dropped by a predetermined distance in the internal space of the ion trap 2 can be pulled up to the original position (near the center of the internal space) by adjusting the voltage applied to the end cap electrodes 20 and 21.

In this ion analyzer, in principle, the procedure of the ion capturing → the cooling → the observation of Brownian motion and the drift motion in the floating state → the cooling →... can be repeated a plurality of times, and the measurement accuracy can be improved by increasing the number of repetitions. In a case where a large number of ions are simultaneously trapped inside the ion trap 2, Coulomb repulsive force is also applied between the ions, and thus, it is necessary to consider the influence of Coulomb repulsive force, but numerical simulation including the repulsive force is possible. Therefore, it is possible to calculate the mass and/or the charge with sufficient accuracy from the measurement result by comparing the simulation result with the experimental result in advance and obtaining the correction arithmetic operation regarding Coulomb repulsive force.

[6] Other Modifications

The ion analysis method and the ion analyzer described above can be further modified as follows.

In the ion analysis method described above, gas having a pressure lower than normal atmospheric pressure is introduced into the ion moving space, and collision between an ion to be measured and the gas is used for measurement. Since the dropping trajectory of an ion in gas varies depending on the geometry of the dropping particle of the ion, it can be said that this is chromatography using gas. If the type of gas to be used is different, for example, the interaction with the dropping particle at the time of collision is different between the case where the gas is $N_2$ and the case where the gas is He. In addition, when the molecular structure of the observation target is different, the interaction with different types of gases is also different, and thus a difference occurs in the terminal velocity vo. Therefore, by comparing the results of measuring ions to be measured respectively using different gases, it is also possible to discriminate ions having the same mass but different molecular structures.

In the above-described ion analysis method, an optical technique of detecting scattered light or the like is used in order to observe or detect ions, but a fluorescent substance may be added in advance to particles to be measured in order to more accurately and efficiently detect ions. As a result, the detection unit only needs to selectively detect light having a wavelength corresponding to the fluorescent substance using, for example, a bandpass filter, so that the SN ratio of the detection signal can be improved, and measurement accuracy and efficiency can be improved.

Furthermore, since the above embodiments and modifications are merely examples of the present invention, it is a matter of course that modifications, additions, deletions, and the like appropriately made within the scope of the gist of the present invention are included in the claims of the present invention.

<Various modes>

It will be understood by those skilled in the art that the exemplary embodiments described above are specific examples of the following modes.

(Clause 1) One mode of an ion analysis method according to the present invention includes:

an ionization step of ionizing a measurement target;
an ion input step of inputting a target ion, which is an ion obtained in the ionization step or an ion derived from the ion obtained in the ionization step, into a moving space which is adjusted to a predetermined gas pressure of a range allowing particles to perform Brownian motion and in which gravity and an electric field are allowed to act;
a measurement step of acquiring, for the target ion input to the moving space, first information relating to a motion by an action of gravity or actions of gravity and the electric field and second information relating to Brownian motion; and
an arithmetic step of obtaining a mass or a charge of the target ion on the basis of the first information and the second information obtained in the measurement step.

(Clause 2) In the ion analysis method according to above Clause 1, in the measurement step, the second information relating to Brownian motion of the target ion in a direction different from a direction in which gravity acts may be acquired.

(Clause 3) In addition, in the ion analysis method according to above Clause 1, in the arithmetic step, a velocity of the target ion may be obtained from the first information, a diffusion coefficient of the target ion may be obtained from the second information, and the mass or the charge of the target ion may be calculated on the basis of the velocity and the diffusion coefficient.

(Clause 20) One mode of an ion analyzer according to the present invention is an ion analyzer for performing the ion analysis method according to Clause 1, the ion analyzer including:

an ionization unit configured to ionize a measurement target;
an analysis chamber having an internal moving space which is adjusted to a predetermined gas pressure to allow particles to perform Brownian motion and in which gravity acts;
an electric field forming unit configured to selectively form an electric field in the moving space;
an ion input unit configured to input a target ion, which is an ion generated by the ionization unit or an ion derived from the ions generated by the ionization unit, into the moving space;
a measurement execution unit configured to acquire, for the target ion input to the moving space, first information relating to a motion by actions of gravity and the electric field and second information relating to Brownian motion; and
an arithmetic processing unit configured to obtain a mass or a charge of the target ion on the basis of the first information and the second information.

In the ion analysis method according to Clause 1 and the ion analyzer according to Clause 20, Brownian motion of the ion, and the motion of the ion due to the action of gravity or both the actions of gravity and the electric field, typically, the dropping motion are observed, and the mass or the charge of the ion is calculated on the basis of information relating to the plurality of such motions. As described above, in CDMS, in order to detect induced charges when an ion to be observed passes, it is necessary to prevent a plurality of ions from passing the vicinity of the detection unit at the same time or in close temporal proximity. However, in the ion analysis method according to Clause 1 and the ion analyzer according to Clause 20, information relating to the motion of each ion can be satisfactorily acquired unless the density of ions is extremely high. As a result, it is possible to know any one or both of the mass and the charge of the ion of macromolecules without performing an operation to substantially isolate the ions in advance. In the ion analysis method according to Clause 1 and the ion analyzer according to Clause 20, since the measurement is executed in a state where gas having a certain degree of density in which Brownian motion of particles occurs exists in the analysis chamber, an extremely high degree of vacuum is not required, which is advantageous for suppressing the analysis cost.

(Clause 4) The ion analysis method according to Clause 1 may further include:

an m/z measurement step of measuring an m/z value in which a valence z is undetermined individually for the target ions; and

a second arithmetic step of obtaining a mass value more accurate than a mass value obtained in the arithmetic step or narrowing down the m/z value on the basis of a value of the mass or the charge obtained in the arithmetic step and the m/z value obtained in the m/z measurement step.

The "m/z measurement step" does not necessarily be calculating the m/z value itself, and includes selecting ions having a specific m/z value. Specifically, for example, the "m/z measurement step" can include an operation of selecting only ions having a specific m/z value in the ion trap and leaving the ions inside the ion trap, or conversely, an operation of selecting only ions having a specific m/z value and discharging the ions from the ion trap. According to the ion analysis method according to Clause 4, even in a case where the accuracy of the mass or the charge calculated in the arithmetic step is not sufficiently high, an accurate mass can be obtained.

(Clause 5) In the ion analysis method according to Clause 1, in the measurement step, the first information may be acquired in a state where the electric field is zero.

In a case where the electric field is not used, information of the charge of the ion cannot be obtained, but the mass of the ion can be calculated using the first information and the second information.

(Clause 6) In the ion analysis method according to Clause 1, in the measurement step, the first information relating to the motion of the target ion under an effective gravitational acceleration apparently adjusted by the action of the electric field may be acquired in a state where the electric field substantially exists.

(Clause 7) In an ion analysis method according to Clause 6, in the measurement step, the first information may be acquired in a state where an electric field to cancel the action of gravity exists.

In the ion analysis methods according to Clause 6 and Clause 7, for example, the drop velocity of the ion can be reduced by reducing the apparent effective gravitational acceleration. As a result, since the residence time of the ion in the moving space, that is, the time for observing the motion of the target ion becomes long, the observation accuracy of the motion is improved, and thus the accuracy of the mass and the charge calculated on the basis of the observation result is also improved.

(Clause 8) In the ion analysis method according to Clause 1, in the measurement step, an optical technique may be used to acquire the first information relating to the motion by the action of gravity or the actions of gravity and the electric field and to acquire the second information relating to Brownian motion individually for the target ion input to the moving space.

The optical technique for obtaining information relating to the motion of the target ion is, for example, acquisition of a microscopic observation image of a predetermined range in which one or a plurality of ions exist using one or a plurality of cameras. Specifically, detection of scattered light by the ion with respect to irradiation light, detection of fluorescence emitted by the ion with respect to irradiation of excitation light, and the like are particularly useful. Alternatively, it is also possible to use a dynamic light scattering method or the like used for measuring the particle diameter of fine particles in a liquid.

(Clause 9) In an ion analysis method according to Clause 8, in the measurement step, a motion of an ion may be grasped by irradiating the ion in the moving space with light and detecting light scattered by the ion or light emitted from the ion.

It goes without saying that the technique for detecting scattered light includes dynamic light scattering (DLS). According to an ion analysis method according to Clause 9, it is possible to accurately grasp the motion of individual ions in the moving space. In particular, by irradiating ions with light having a short wavelength and detecting the scattered light, not only ions having a large size but also ion having a relatively small size can be detected, and the range of the m/z value of the ion to be measured can be widened.

(Clause 10) In the ion analysis method according to Clause 1, in the ion input step, the target ions may be input to the moving space by temporarily holding the target ions in an ion holding part provided outside the moving space and then releasing the target ions at a predetermined timing.

(Clause 11) In an ion analysis method according to Clause 10, the ion holding part may be an ion trap which includes a plurality of electrodes and is capable of holding ions in a space surrounded by the plurality of electrodes by applying a rectangular wave voltage to at least one of the plurality of electrodes.

According to the ion analysis methods according to Clause 10 and Clause 11, a plurality of ions can be input to the moving space from substantially the same position substantially simultaneously. As a result, measurement can be efficiently performed. In addition, since the measurement can be repeatedly performed at regular time intervals, it is convenient to measure ions derived from a continuously supplied sample. According to the ion analysis methods according to Clause 9 and Clause 10, since it is possible to cause a dropping motion from a state where the initial energy in the direction of the action of gravity of the ions is substantially zero, it is possible to perform measurement with high accuracy.

(Clause 12) In the ion analysis method according to Clause 10, in the ion input step, the ions held in the ion trap may be distinguished according to m/z values, and ions remaining after being distinguished may be input to the moving space.

According to an ion analysis method according to Clause 12, even in a case where ions derived from various components are generated in the ionization step, it is possible to measure the mass and the charge of ions limited to ions derived from a specific component. As a result, the measurement accuracy of the mass and the charge can be improved.

(Clause 13) One mode of an ion analysis method according to the present invention includes:

an ionization step of ionizing a measurement target;
an ion input step of inputting target ions, which are ions obtained in the ionization step or ions derived from the ions obtained in the ionization step, into a moving space which is adjusted to a predetermined gas pressure and in which gravity acts and an electric field acting on the ions in a direction orthogonal to or oblique to a direction of an action of the gravity is formed;
a separation step of spatially separating the target ions input to the moving space from other ions using motions of ions reflecting a difference in size and mass of ions due to the action of gravity and motions reflecting a difference in charge of the ions due to an action of the electric field in the moving space; and
a detection step of detecting at least a part of the target ions separated in the separation step.

(Clause 21) Another mode of the ion analyzer according to the present invention is an apparatus for performing the ion analysis method according to Clause 13, the apparatus including:

an ionization unit configured to ionize a measurement target;
an analysis chamber having an internal moving space which is adjusted to a predetermined gas pressure and in which gravity acts;
an electric field forming unit configured to selectively form, inside the moving space, an electric field acting on ions in a direction orthogonal to or oblique to a direction of an action of gravity;
an ion input unit configured to input target ions, which are ions generated by the ionization unit or ions derived from the ions generated by the ionization unit, into the moving space; and
a detection unit configured to detect at least a part of the target ions spatially separated from other ions by motions of the ions reflecting a difference in size and mass of ions due to the action of gravity and motions reflecting a difference in charge of the ions due to an action of the electric field in the moving space.

According to the ion analysis method according to Clause 13 and an ion analyzer according to Clause 21, even ions of macromolecules can be separated and detected according to the mass and the charge by both the action of gravity and the action of the electric field acting in a direction different from the direction of the action of gravity. As a result, also by these ion analysis method and ion analyzer, it is possible to know any one or both of the mass and the charge of the ions of macromolecules without performing an operation to substantially isolate the ions in advance. In particular, in these ion analysis method and ion analyzer, ions are spatially, that is, physically separated according to the mass and charge of ions, so that it is easy to detect ions, and it is also possible to perform operations such as selectively extracting a part of the separated ions (for example, ions of a specific valence range), performing more detailed measurement, and the like.

(Clause 14) In the ion analysis method according to Clause 13, the electric field formed in the moving space may be a DC electric field acting on the ions in a direction orthogonal to the direction of the action of gravity.

According to an ion analysis method according to Clause 14, if ions have the same mass, the ions reach different positions in the moving space according to their valences by dropping motion. As a result, the valences are easily discriminated, and the processing of calculating the valences is simplified.

(Clause 15) The ion analysis method according to Clause 13 may further include:

an m/z measurement step of measuring an m/z value in which a valence z is undetermined individually for the target ions; and

an arithmetic step of obtaining a charge q or the valence z of the target ion on the basis of a detection result in the detection step, and calculating a mass of the target ion on the basis of an obtained result and the m/z value obtained in the m/z measurement step.

According to an ion analysis method according to Clause 15, an accurate mass of the target ion can be easily obtained.

(Clause 16) In the ion analysis method according to Clause 13, information relating to inclinations of dropping trajectories of the target ions may be obtained by the detection step, and the valences z of the target ions may be obtained on the basis of the information.

According to an ion analysis method according to Clause 16, the valences can be easily calculated by, for example, analyzing a photographed microscopic observation image.

(Clause 17) In the ion analysis method according to Clause 13, in the ion input step, the target ions may be input to the moving space by temporarily holding the target ions in an ion holding part provided outside the moving space and then releasing the target ions at a predetermined timing.

(Clause 18) In an ion analysis method according to Clause 17, the ion holding part may be an ion trap which includes a plurality of electrodes and is capable of holding ions in a space surrounded by the plurality of electrodes by applying a rectangular wave voltage to at least one of the plurality of electrodes.

According to the ion analysis methods according to Clause 17 and Clause 18, a plurality of ions can be input to the moving space from substantially the same position substantially simultaneously. As a result, measurement can be efficiently performed. In addition, since the measurement can be repeatedly performed at regular time intervals, it is convenient to measure ions derived from a continuously supplied sample. According to the ion analysis methods according to Clause 16 and Clause 17, since it is possible to cause a dropping motion from a state where the initial energy in the direction of the action of gravity of the ions is substantially zero, it is possible to perform measurement with high accuracy.

(Clause 19) In the ion analysis method according to Clause 18, in the ion input step, the ions held in the ion trap may be distinguished according to m/z values, and ions remaining after being distinguished may be input to the moving space.

According to an ion analysis method according to Clause 19, even in a case where ions derived from various components are generated in the ionization step, it is possible to measure the valences and to examine the distribution of the valences of ions limited to ions derived from a specific component.

REFERENCE SIGNS LIST

1... Ion Supplier
2, 8... Ion Trap
20... Incident-Side End Cap Electrode
20a... Ion Incident Opening
21... Emission-Side End Cap Electrode
21a... Ion Emission Opening
22... Ring Electrode
22a... Observation Opening
3, 6, 7... Ion Drift Part
30, 60... Ion Moving Space
60... Ion Moving Space
31, 32, 61, 62... Flat-plate Electrode
31a... Ion Passing Opening
4, 4X... Detection Unit
5... Voltage Generator
50... Trap Voltage Generator
51... End Cap Voltage Generator
52... Drift Part Voltage Generator
53... Drift Part Voltage Generator
58... Quadrupole Voltage Generator
63... Auxiliary Electrode
64... Aperture Plate
64a... Aperture Opening

9... Quadrupole Mass Separator
10... Data Processing Unit

**Claims**

1. An ion analysis method comprising:

   an ionization step of ionizing a measurement target;
   an ion input step of inputting a target ion, which is an ion obtained in the ionization step or an ion derived from the ion obtained in the ionization step, into a moving space which is adjusted to a predetermined gas pressure of a range allowing particles to perform Brownian motion and in which gravity and an electric field are allowed to act;
   a measurement step of acquiring, for the target ion input to the moving space, first information relating to a motion by an action of gravity or actions of gravity and the electric field and second information relating to Brownian motion; and
   an arithmetic step of obtaining a mass or a charge of the target ion on a basis of the first information and the second information obtained in the measurement step.

2. The ion analysis method according to claim 1, wherein in the measurement step, the second information relating to Brownian motion of the target ion in a direction different from a direction in which gravity acts is acquired.

3. The ion analysis method according to claim 1, wherein in the arithmetic step, a velocity of the target ion is obtained from the first information, a diffusion coefficient of the target ion is obtained from the second information, and the mass or the charge of the target ion is calculated on a basis of the velocity and the diffusion coefficient.

4. The ion analysis method according to claim 1, further comprising:

   an m/z measurement step of measuring an m/z value in which a valence z is undetermined individually for the target ions; and
   a second arithmetic step of obtaining a mass value more accurate than a mass value obtained in the arithmetic step or narrowing down the m/z value on a basis of a value of the mass or the charge obtained in the arithmetic step and the m/z value obtained in the m/z measurement step.

5. The ion analysis method according to claim 1, wherein in the measurement step, the first information is acquired in a state where the electric field is zero.

6. The ion analysis method according to claim 1, wherein in the measurement step, the first information relating to the motion of the target ion under an effective gravitational acceleration apparently adjusted by the action of the electric field is acquired in a state where the electric field substantially exists.

7. The ion analysis method according to claim 6, wherein in the measurement step, the first information is acquired in a state where an electric field to cancel the action of gravity exists.

8. The ion analysis method according to claim 1, wherein in the measurement step, an optical technique is used to acquire the first information relating to the motion by the action of gravity or the actions of gravity and the electric field and to acquire the second information relating to Brownian motion individually for the target ion input to the moving space.

9. The ion analysis method according to claim 8, wherein in the measurement step, a motion of an ion is grasped by irradiating the ion in the moving space with light and detecting light scattered by the ion or light emitted from the ion.

10. The ion analysis method according to claim 1, wherein in the ion input step, the target ions are input to the moving space by temporarily holding the target ions in an ion holding part provided outside the moving space and then releasing the target ions at a predetermined timing.

11. The ion analysis method according to claim 10, wherein the ion holding part is an ion trap which includes a plurality of electrodes and is capable of holding ions in a space surrounded by the plurality of electrodes by applying a rectangular wave voltage to at least one of the plurality of electrodes.

12. The ion analysis method according to claim 10, wherein in the ion input step, the ions held in the ion trap are distinguished according to m/z values, and ions remaining after being distinguished are input to the moving space.

13. An ion analysis method comprising:

an ionization step of ionizing a measurement target;
an ion input step of inputting target ions, which are ions obtained in the ionization step or ions derived from the ions obtained in the ionization step, into a moving space which is adjusted to a predetermined gas pressure and in which gravity acts and an electric field acting on the ions in a direction orthogonal to or oblique to a direction of an action of the gravity is formed;
a separation step of spatially separating the target ions input to the moving space from other ions using motions of ions reflecting a difference in size and mass of ions due to the action of gravity and motions reflecting a difference in charge of the ions due to an action of the electric field in the moving space; and
a detection step of detecting at least a part of the target ions separated in the separation step.

14. The ion analysis method according to claim 13, wherein the electric field formed in the moving space is a DC electric field acting on the ions in a direction orthogonal to the direction of the action of gravity.

15. The ion analysis method according to claim 13, further comprising:

an m/z measurement step of measuring an m/z value in which a valence z is undetermined individually for the target ions; and
an arithmetic step of obtaining a charge q or the valence z of the target ion on a basis of a detection result in the detection step, and calculating a mass of the target ion on a basis of an obtained result and the m/z value obtained in the m/z measurement step.

16. The ion analysis method according to claim 13, wherein information relating to inclinations of dropping trajectories of the target ions is obtained by the detection step, and the valence z of the target ions are obtained on the basis of the information.

17. The ion analysis method according to claim 13, wherein in the ion input step, the target ions are input to the moving space by temporarily holding the target ions in an ion holding part provided outside the moving space and then releasing the target ions at a predetermined timing.

18. The ion analysis method according to claim 17, wherein the ion holding part is an ion trap which includes a plurality of electrodes and is capable of holding ions in a space surrounded by the plurality of electrodes by applying a rectangular wave voltage to at least one of the plurality of electrodes.

19. The ion analysis method according to claim 18, wherein in the ion input step, the ions held in the ion trap are distinguished according to m/z values, and ions remaining after being distinguished are input to the moving space.

20. An ion analyzer comprising:

an ionization unit configured to ionize a measurement target;
an analysis chamber having an internal moving space which is adjusted to a predetermined gas pressure to allow particles to perform Brownian motion and in which gravity acts;
an electric field forming unit configured to selectively form an electric field in the moving space;
an ion input unit configured to input a target ion, which is an ion generated by the ionization unit or an ion derived from the ion generated by the ionization unit, into the moving space;
a measurement execution unit configured to acquire, for the target ion input to the moving space, first information relating to a motion by actions of gravity and the electric field and second information relating to Brownian motion; and
an arithmetic processing unit configured to obtain a mass or a charge of the target ion on the basis of the first information and the second information.

21. An ion analyzer comprising:

an ionization unit configured to ionize a measurement target;

an analysis chamber having an internal moving space which is adjusted to a predetermined gas pressure and in which gravity acts;

an electric field forming unit configured to selectively form, inside the moving space, an electric field acting on ions in a direction orthogonal to or oblique to a direction of an action of gravity;

an ion input unit configured to input target ions, which are ions generated by the ionization unit or ions derived from the ions generated by the ionization unit, into the moving space; and

a detection unit configured to detect at least a part of the target ions spatially separated from other ions by motions of the ions reflecting a difference in size and mass of ions due to the action of gravity and motions reflecting a difference in charge of the ions due to an action of the electric field in the moving space.

# Fig. 1

ION SUPPLIER (1)

TRAP DC VOLTAGE GENERATOR (51)

TRAP VOLTAGE GENERATOR (50)

DRIFT PART VOLTAGE GENERATOR (52)

DATA PROCESSING UNIT (10)

# Fig. 2

ION SUPPLIER — 1

TRAP DC VOLTAGE GENERATOR — 51

TRAP VOLTAGE GENERATOR — 50

DRIFT PART VOLTAGE GENERATOR — 53

DATA PROCESSING UNIT — 10

# Fig. 3

# Fig. 4

# Fig. 5

# Fig. 6

# Fig. 7

# Fig. 8

# Fig. 9

# Fig. 10

DISTANCE Y

$Y = az^2 + bz$

CHARGE z

## INTERNATIONAL SEARCH REPORT

| | International application No. |
|---|---|
| | **PCT/JP2023/042563** |

### A. CLASSIFICATION OF SUBJECT MATTER

*G01N 15/10*(2024.01)i; *G01N 27/622*(2021.01)i; *H01J 49/42*(2006.01)i
FI: G01N15/10 A; G01N27/622; H01J49/42 400; H01J49/42 150

According to International Patent Classification (IPC) or to both national classification and IPC

### B. FIELDS SEARCHED

Minimum documentation searched (classification system followed by classification symbols)

G01N15/10; G01N27/622; H01J49/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2017/069260 A1 (KAWANO LAB. INC.) 27 April 2017 (2017-04-27)<br>fig. 18 | 1-3, 5-11, 13-14, 16-18, 20-21 |
| A | fig. 18 | 4, 12, 15, 19 |
| Y | JP 10-206387 A (HITACHI, LTD.) 07 August 1998 (1998-08-07)<br>fig. 1 | 1-3, 5-11, 13-14, 16-18, 20-21 |
| A | fig. 1 | 4, 12, 15, 19 |
| A | JP 2017-198468 A (KEIO GIJUKU) 02 November 2017 (2017-11-02)<br>entire text, all drawings | 1-21 |
| A | JP 2020-204604 A (HORIBA, LTD.) 24 December 2020 (2020-12-24)<br>entire text, all drawings | 1-21 |
| A | JP 2020-101374 A (SHIMADZU CORPORATION) 02 July 2020 (2020-07-02)<br>entire text, all drawings | 1-21 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/042563**

| Patent document cited in search report | | | Publication date (day/month/year) | Patent family member(s) | | | Publication date (day/month/year) |
|---|---|---|---|---|---|---|---|
| WO | 2017/069260 | A1 | 27 April 2017 | US<br>fig. 18 | 2018/0313738 | A1 | |
| JP | 10-206387 | A | 07 August 1998 | (Family: none) | | | |
| JP | 2017-198468 | A | 02 November 2017 | (Family: none) | | | |
| JP | 2020-204604 | A | 24 December 2020 | (Family: none) | | | |
| JP | 2020-101374 | A | 02 July 2020 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 9 Measurement of Elementary Charge -Description of Millikan's Measurement Principle of Elementary Charge. Shiga Prefectural Education Center, 28 November 2023
- **N.C. CONTINO**. Charge detection mass spectrometry for single ions with a limit of detection. *International Journal of Mass Spectrometry*, 2013, vol. 345 (347), 153-159
- Charge Detection. Megadalton Solutions, Inc., 28 November 2023

- **KENICHIRO AOKI**. To Those Who Want to Learn Modern Physics -From Atoms to Cosmology. Keio University Press, 20 May 2011, 30-32
- **OSAMU FURUHASHI**. Research and Development of Digital Ion Trap Mass Spectrometer. *Shimadzu Review*, 2005, vol. 62 (3), 4
- Dynamic Light Scattering DLS Measurement Principle. Consortium for Measurement Solution (COMS), 28 November 2023